# EUROPEAN PATENT APPLICATION

(11) **EP 1 524 597 A1**
(43) Date of publication of application: **20.04.2005**
(21) Application number: 03292558.8
(22) Date of filing: 14.10.2003
(51) Int. Cl.: G06F 9/46

(54) **Method for managing threads in a memory-constrained system**

(71) Applicant: Axalto S.A., 92120 Montrouge (FR)
(72) Inventor: Blochet, Marc Schlumberger Systèmes, 78431 Louveciennes (FR)
(74) Representative: Renault, Patricia Marie Jacqueline

(57) **Abstract**

The present invention consists in a method for managing threads in a device comprising data processing means (3), a non-volatile memory (7) and a volatile memory (11). The method consists in storing a thread dynamic execution context of a program, called the thread control block (TCB), in said non-volatile memory (7).

## Description

### TECHNICAL FIELD

The present invention relates to a method for managing threads in a memory-constrained data processing system and a device in which the method is implemented.

The application programs and operating system services are composed of tasks, also called processes: a thread is commonly defined as a basic unit of execution of a task. The thread is an executable sequence of instructions, which may be scheduled for execution and executed independently of the execution of other threads.

The invention is applicable to, but not limited to, embedded system and for example electronic smart cards.

### PRIOR ART

In a device with limited random access memory (hereafter called RAM) size, it is desirable to minimize the amount of memory that is allocated to a thread. The RAM memory available in a memory-constrained device limits the number of threads that can be run concurrently.

For a thread to be scheduled, a kernel data structure has to be created in RAM memory that retains the thread dynamic execution context, including the hardware context when the thread is suspended. The kernel data structure associated to a thread is named a "Thread Control Block" (TCB). The size of a TCB depends on the kernel features and the hardware specificities. In prior art, a TCB exists while the thread exists.

The RAM space available limits the number of TCB and the number of stacks that can be allocated to run threads. Regarding the stack, even if the stack size per thread is drastically limited, it still remains the most significant amount of memory resources needed to run a thread.

One goal of the present invention is to allow a great number of threads in a device where RAM size is limited.

Moreover, an embedded system must start or "boot" quickly. Creating and starting threads is a waste of time.

Another goal of the present invention is to save time when starting a system.

### SUMMARY OF THE INVENTION

The present invention relates to a method for managing threads in a device comprising data processing means, a non-volatile memory and a volatile memory, characterized in that it consists in storing a thread dynamic execution context of a program, called the thread control block (TCB), in non-volatile memory. The method loads the TCB in said volatile memory when the thread is activated.

The method according to the present invention allocates a stack to a thread when the thread is activated and releases it when the thread is no longer activated.

The method according to the present invention is aimed at discharging volatile memory by creating a persistent state of the running thread and releasing said volatile memory from allocation for TCB and stack.

### BRIEF DESCRIPTION OF THE DRAWINGS

Other purposes, features and advantages of the invention will appear on reading the description which follows of the implementation of the method according to the invention and of a mode of realization of a portable object designed for this implementation, given as a non-limiting example, and referring to the attached drawings in which:
- Figure 1 is a schematic view of a non-limiting mode of realization of a unit designed to implement the present invention;
- Figure 2 represents all the typical elements constituting a program in execution ;
- Figure 3 is a schematic view representing the pre-loading phase and the activation phase of tasks and corresponding threads according to the method of the present invention ;
- Figures 4a to 4e is a schematic view representing the steps followed in order to run thread and manage the TCB.

### BEST WAY OF REALISING THE INVENTION

The device according to the present invention comprises at least a microprocessor central processing unit (CPU) 3 with two-way connection via an internal bus 5 to a non volatile memory 7 (hereafter called NVM) of type ROM, EEPROM, Flash, FeRam or else storing applications, micro-kernel and systems components and a volatile memory 11 of type RAM. The device may comprise additional components not shown, connected to the internal bus as input/output means 13 to communicate with the exterior.

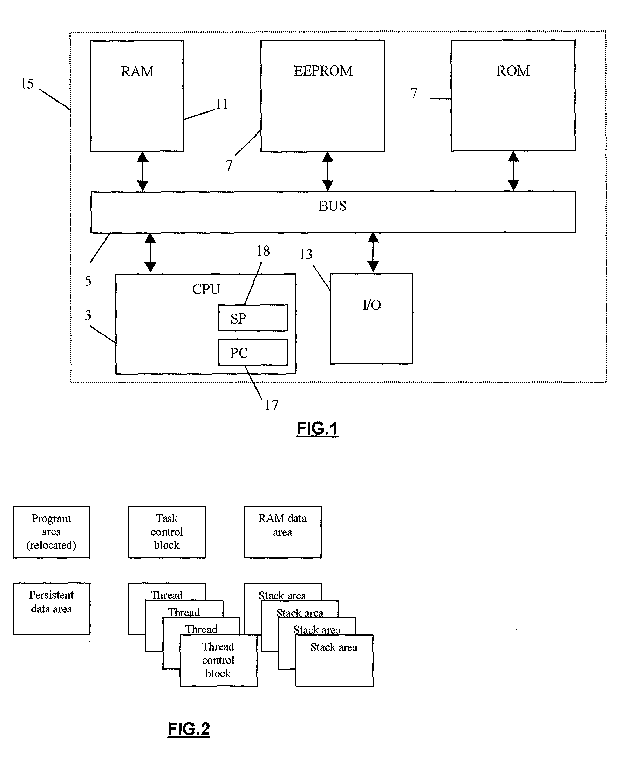

As a non-limiting example, the device corresponds to an onboard system comprising an integrated electronic module 15 illustrated on figure 1. This type of module is generally manufactured as a monolithic integrated electronic microcircuit, or chip, which once physically protected by any known means can be assembled on a portable object such as for example a smart card, integrated circuit card which can be used in various fields.

The microprocessor central processing unit CPU 3 illustrated on figure 1 comprises in particular a program counter register PC 17 giving the address of the next instruction to be executed and a stack pointer register SP 18 giving the memory address of the top of the stack.

The microprocessor can be any processor with or without a memory management unit (MMU), and with or without a memory protection unit (MPU).

The device runs an operating system and one or several application programs and in particular embodiments, an embedded micro-kernel. Application programs are composed of tasks and threads. In case of a micro-kernel implementation method, OS services are also composed of tasks and threads.

The operating system and the application programs (and the micro-kernel) can be installed in ROM memory or in any type of NVM memory. They are directly executed from on-chip ROM or NVM and they don't need to be loaded to RAM.

We commonly define the "tasks" that represent the execution environment. They include memory (address space) and threads.

Figure 2 shows the set of elements, which constitute a program in execution. This set is called the image of the program. With traditional operating systems (and traditional micro-kernel), these elements are created/allocated as many times as the program is executed.

The image of the program (the program is represented in figure 2 by the program area) comprises:
- A task descriptor (in figure 2, the task control block). The task descriptor contains static information. Part of this information is related to the relocated program (program mapping, pages or segments descriptors).
- A thread descriptor (in figure 2, thread control block or TCB). The TCB contains dynamic control information related to the execution of the thread. A task contains one or several threads.
- A "user" stack area in RAM that must be associated to a thread for this thread to run. We distinguish the "user" stack that belongs to the thread from the kernel stack used by the kernel when the thread enters a kernel call. In this document, "stack" refers to the "user" stack.
- A data segment(s) in RAM (in figure 2, RAM data area).
- A data segment(s) in NVM (optional) (in figure 2, persistent data area).
- A code segment that contains the relocated program (in figure 2, program area).

Unlike traditional servers or workstations, we expect that an embedded device or a smart card starts (or "boots") rapidly after a reset. A characteristic of the micro-kernel design for this type of devices is therefore:
- To allow a fast system "boot" and system activation after a reset.
- To allow a fast application (or system component) launching.

For these reasons, the applications and the system itself according to the invention are persistently running.

The method according to the present invention consists in managing threads persistence and kernel data structures in non-volatile memory and allocating volatile memory resource to a thread only when said thread is activated as developed herebelow.

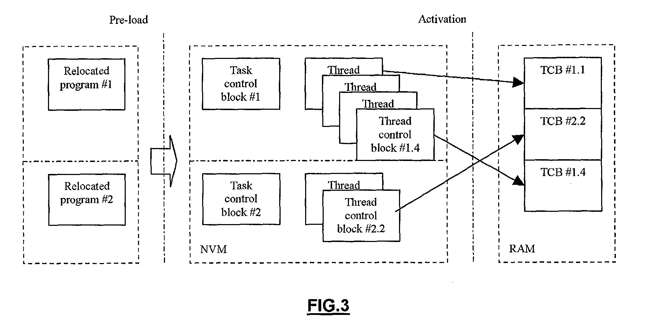

As shown in figure 3, the elements of an image of a program are pre-loaded in non-volatile memory. When a program is installed in the device, the image is pre-loaded (or pre-executed) in non-volatile memory (NVM), using an embedded loader or an image generated by the developments tools. This pre-loading phase includes the relocation phase, the persistent memory allocation and the creation of the corresponding task and thread structures. The initial part of the execution is pre-cooked during an init phase. The image is then frozen in a given state. The next execution of the application (or system component) will start at this pre-cooked point. The pre-cooked information, including the kernel data structures that describe the task and thread entities, is stored in NVM. In particular, the TCB is created in NVM. The TCB represents the persistent (or frozen) state(s) of the running thread (a running thread but not an activated thread as explained hereafter). This state remains between two re-starts of the device. So the task and thread need to be created only once during the device lifetime. So the method according to the present invention allows to create a persistent task and one or more persistent thread(s) for the program, the corresponding kernel data structures, in particular the TCB in NVM in order to define persistent state(s) of the running thread.

In the illustrated embodiment, a thread has two possible persistent states:
- An initial persistent state in which the thread is "ready to enter the thread's main entry point"; This state mainly specifies the thread's entry point address and how the stack is to be managed. It usually does not retain a relevant CPU context.
- A waiting persistent state in which the thread is "waiting for an event" (the event can be for example a message in the micro-kernel implementation). This state retains a relevant CPU context.

As shown in figure 3, for a thread to be scheduled, and only when the thread has to be scheduled, a TCB (thread control block) must be allocated in RAM and the corresponding persistent TCB must be copied from NVM memory to this RAM. This is the thread "activation" mechanism. To be actually scheduled, the thread must be "activated". When a thread is activated, in fact when the CPU is going to be assigned to said thread, a TCB area is allocated in RAM memory and the persistent TCB is copied into this RAM. The method associates stack RAM space to a running thread only when this thread is activated.

However, this is one possible embodiment ; the thread activation may include the allocation of a stack or not:
- If a stack area is specified during the thread creation or during the initial explicit activation, this stack is definitely attached to the thread until the next reset of the device;
- If a stack area is not specified, the stack allocation will be performed by the scheduler.

The activation can be started by an event (for example, in the micro-kernel implementation, by an IPC message) or else (see after) : so in this case, the TCB is loaded in RAM and a stack is allocated only when an event is sent to the thread.

A thread is activated:
- Explicitly by another thread or by the kernel through a kernel function for an initial persistent state
- Implicitly when an event is sent to the thread for a "waiting" persistent state.

The activation phase is a fast mechanism : it can be done by scheduler and IPC mechanism.

When the thread has completed its task and is waiting for another event or message, the stack and the TCB are released. Before completing its task, the thread may issue several IPC send and/or wait without releasing its TCB/stack. Before being released, the TCB in RAM may be optionally copied into the persistent TCB in NVM in order to define a new persistent state.

The following specification describes in detail the operation of an embedded micro-kernel in a memory resource constraint device. The present invention applies for example to a micro-kernel for smart cards.

Micro-kernel based operating system are designed as a collection of cooperating servers (threads) running above the micro-kernel. These servers communicate with messages, using the inter-process communication (IPC) service provided by the kernel. Message passing (IPC) had become the distinguishing characteristic of the micro-kernels.

To be explicitly activated, a thread must have in an initial persistent (frozen) state that launches the thread at its main entry point.

If the number of running threads is high, not all TCB can be present in RAM. It is desirable to load in RAM memory only the TCBs that are really necessary. For example, a thread waiting for an IPC message is suspended and cannot be scheduled. Thus an instance of its TCB in RAM memory is not necessarily mandatory.

In the micro-kernel implemented method, the TCB is loaded in RAM only when an IPC message is sent to the thread. As a consequence, we define a persistent "wait" state in the persistent TCB that retains all the parameters necessary to process an incoming IPC message.

When a thread is created, the initial persistent state is likely (but not necessarily) a state that launches the thread at its main entry point. Thus the thread can do some initializations before entering a persistent wait state. The thread must be able to define a new persistent state that is different from the initial state. The proposed method allows a thread to issue an IPC "wait" request that simultaneously updates the persistent TCB.

A stack is allocated to the thread by a scheduler when an IPC message is sent to the thread. The stack is released when the thread enters again its persistent wait state. The kernel provides one or several stacks for this purpose.

The present invention adds logic to activate the pre-cooked threads. In particular, it adds logic to the IPC mechanism for loading a TCB in RAM memory when an IPC message is sent to a thread. Conversely the present invention adds logic to the IPC mechanism to write a TCB in NVM memory in order to free space in RAM when the thread is no longer scheduled.

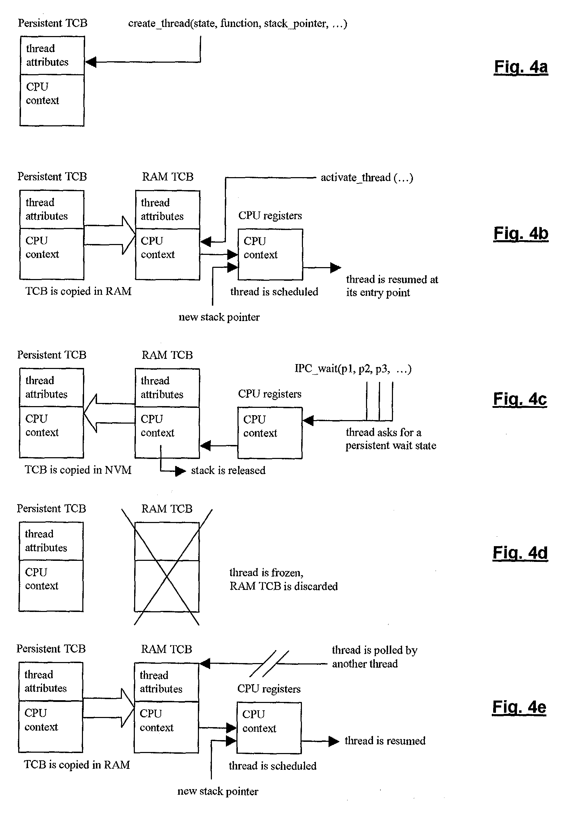

Figure 4 illustrates how the kernel runs threads and manages TCB, in particular when a thread wants to modify its persistent state. Closely related operation, such as stack allocation is also mentioned.

As shown in figure 4a, the first operation is to create the thread. A thread is created with at least those three attributes:
- A main entry point
- An initial state, that could be "ready" if the thread must be unconditionally run by the kernel after a card reset, or "idle" if the thread must be explicitly activated by an operating system entity later on.
- How the stack is to be managed.

This creation allocates and initializes a TCB in NVM memory. An initial and minimal CPU context (registers) is put in the TCB. A stack data segment may be optionally specified during the thread creation, but in another scenario, the kernel allocates the stack when the thread is scheduled. The thread is frozen in an initial state that corresponds to its main entry point: thus, when the thread is scheduled for the first time, it enters its main entry function.

The second operation represented in figure 4b is to explicitly activate the thread. This activation allocates a TCB in RAM memory. The TCB in RAM receives a copy of the persistent TCB content. The thread's state becomes "ready" to be scheduled. A stack data segment may be optionally specified during the thread activation, but in another scenario, the kernel allocates the stack when the thread is scheduled.

In this scenario, we consider that several threads share a same common stack. A development of this invention is to manage several common stacks.

When the scheduler schedules the thread, it allocates the common stack to the thread. The stack pointer value kept in the CPU context area of the RAM TCB is updated, according to the newly allocated stack. Then the scheduler resumes the thread, restoring the CPU context, in particular the program counter (PC) and the stack pointer (SP): the thread enters its main entry point.

The third operation for a thread is to add or modify a new persistent state (if the thread wants a new persistent state). In figure 4c, a new persistent state is added. In this scenario, the thread creates a persistent "IPC wait" state.

Creating a new persistent state is an operation bundled with an "IPC wait" operation. A parameter of the IPC wait function indicates that the thread asks for a new persistent state. Once frozen, subsequent calls to this same IPC wait function will not freeze the thread again. The thread must be explicitly "unfrozen" for a new freeze to occur. A pending IPC operation includes an implicit storage of the thread's [CPU] context in the RAM TCB. To register a new persistent state, the current thread's context must be copied into the persistent TCB. For this mechanism to be feasible, the IPC context (i.e. the parameters that describe the IPC) must be fully contained in the TCB. More precisely, an IPC parameter must not be located in a RAM area that will be erased or lost when the thread is frozen. In fact, the solution is to store the IPC context in the CPU context (registers). Thus when the CPU context is saved in the TCB, the IPC context is also implicitly saved in the TCB. For obvious reasons, an IPC wait operation associated with a persistent state must not use buffers and variables located in the stack.

Then, as shown in figure 4d, the RAM TCB has been copied in the persistent TCB, the RAM TCB is marked "discardable". Then this TCB can be reused for another thread. A practical embodiment could be to provide this TCB slot for the same thread if not reused.

As represented in figure 4e, when a thread sends an IPC message to the [frozen] thread (i.e. polls the thread), the IPC mechanism first searches the RAM TCB of the receiver. If the TCB is found, the operation continues as usual. If the RAM TCB is not found, the IPC mechanism looks at the persistent TCB. If the persistent state is "waiting" [an IPC message], a free RAM TCB is searched, possibly re-allocating a "discardable" TCB. If there is no free TCB, the IPC request fails. According to another embodiment, the IPC request waits for a free RAM TCB. If a free TCB is found, the persistent TCB is copied into the RAM TCB and the IPC operation continue as usual.

If a common stack is to be allocated when the thread receives an IPC message, the thread cannot be resumed doing a return from the IPC function call. A programming model using function call/return supposes implicitly that the stack is persistent between the call and the return.

In micro-kernel architecture, a server thread always blocks on an IPC request. The main function is likely an initialization part followed by an infinite loop:

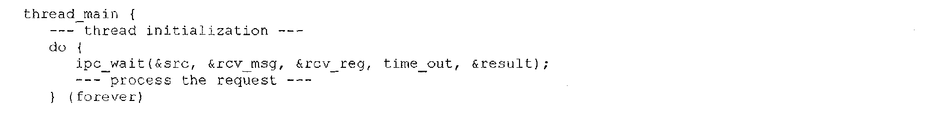

The solution is to split the IPC function in two parts, the IPC request and a callback function. The callback function is invoked when the IPC completes.

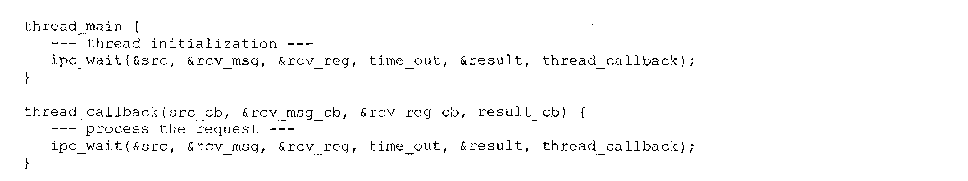

When the scheduler resumes the IPC wait call, it allocates the stack and triggers a return (i.e. a call) to the thread callback function.

## Claims

1. Method for managing threads in a device comprising data processing means (3), a non-volatile memory (7) and a volatile memory (11), **characterized in that** it consists in storing a thread dynamic execution context of a program, called the thread control block (TCB), in said non-volatile memory (7).

2. Method according to claim 1, **characterized in that** it consists in loading the TCB in said volatile memory (11) when the thread is activated.

3. Method according to one of claims 1 to 2, **characterized in that** it consists in allocating a stack to a thread when the thread is activated and releasing it when the thread is no longer activated.

4. Method according to one of claims 1 to 3, **characterized in that** it consists, when the thread is no longer activated, in keeping the TCB already stored in non volatile memory or in adding to or replacing the TCB of said thread in the non-volatile memory by the TCB in volatile memory in order to define a new persistent state.

5. Method according to one of claims 1 to 4, **characterized in that** it consists loading the TCB in said volatile memory (11) only when an event or a message is sent to the thread and/or when the thread is explicitly launched by a kernel function.

6. Method according to one of claims 1 to 5, **characterized in that** if a stack is specified during the thread initial activation, said stack is definitely attached to the thread until a determined event happens, if not, the stack allocation is performed during the activation.

7. Method according to one of claims 1 to 6, **characterized in that** when the thread is no longer activated, the TCB in volatile memory is marked discardable in order to be reused for another thread or for the same thread if not reused.

8. Method according to one of claims 1 to 7, **characterized in that** it consists in storing a whole image of a program, including the TCB, in non-volatile memory to define a persistent state of the task(s) and corresponding thread(s) of said program.

9. Method for initializing a device managing threads and comprising data processing means (3), a non-volatile memory (7) and a volatile memory (11), **characterized in that** it consists in pre-loading a thread dynamic execution context of a program, called the thread control block (TCB), in said non-volatile memory (7).

10. Device comprising data processing means (3), a non-volatile memory (7) and a volatile memory (11), **characterized in that** said data processing means (3) enables to store the thread dynamic execution context, called the thread control block (TCB), in said non-volatile memory (7).

11. Device according to claim 10, **characterized in that** said data processing means comprise a kernel.

12. Computer program including program code instructions to execute the steps of the method according to one of claims 1 to 8 when said program is run in a data processing system.

13. Computer program including program code instructions to execute the steps of the method according to claim 9 when said program is run in a data processing system.
